Europäisches Patentamt

European Patent Office

Office européen des brevets

(11) Publication number: **0 199 361 B1**

# EUROPEAN PATENT SPECIFICATION

(45) Date of publication of patent specification: **24.02.93** (51) Int. Cl.5: **G09G 3/36**

(21) Application number: **86105709.9**

(22) Date of filing: **25.04.86**

(54) **Driver circuit for liquid crystal display.**

(30) Priority: **26.04.85 JP 90006/85**
**26.04.85 JP 90008/85**

(43) Date of publication of application:
**29.10.86 Bulletin 86/44**

(45) Publication of the grant of the patent:
**24.02.93 Bulletin 93/08**

(84) Designated Contracting States:
**DE FR GB**

(56) References cited:
**DE-A- 3 212 863**
**GB-A- 2 115 199**
**GB-A- 2 149 181**
**US-A- 4 395 708**

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **Hosono, Masaki**
**9-21, Honkugenuma-4-chome**
**Fujisawa-shi(JP)**
Inventor: **Nemoto, Yukio**
**1310-4, Oiso, Oisomachi**
**Naka-gun Kanagawa-ken(JP)**

(74) Representative: **Patentanwälte Leinweber & Zimmermann**
**Rosental 7/II Aufg.**
**W-8000 München 2 (DE)**

Rank Xerox (UK) Business Services
(3.10/3.5x/3.0.1)

**Description**

BACKGROUND OF THE INVENTION

FIELD OF THE INVENTION

This invention relates to a driver circuit for a liquid crystal display that can be employed in a liquid crystal television receiver or the like.

DESCRIPTION OF THE PRIOR ART

In recent years, pocket-sized liquid crystal television receivers have been available. In such a liquid crystal television receiver, each of switching elements of FET's provided at respective elemental liquid crystal cell arranged in a matrix shape on a liquid crystal panel is supplied with an input image signal voltage and a switching signal and is connected with one electrode of each liquid crystal cell. A common electrode commonly connected with the opposite electrode of each liquid crystal cell is supplied with a common voltage. Since the liquid crystal panel must be A.C. driven, the input signal voltage and common voltage are inverted in their polarity every one field.

Referring now to the drawings, an example of the prior art driver circuit for liquid crystal displays will be explained below.

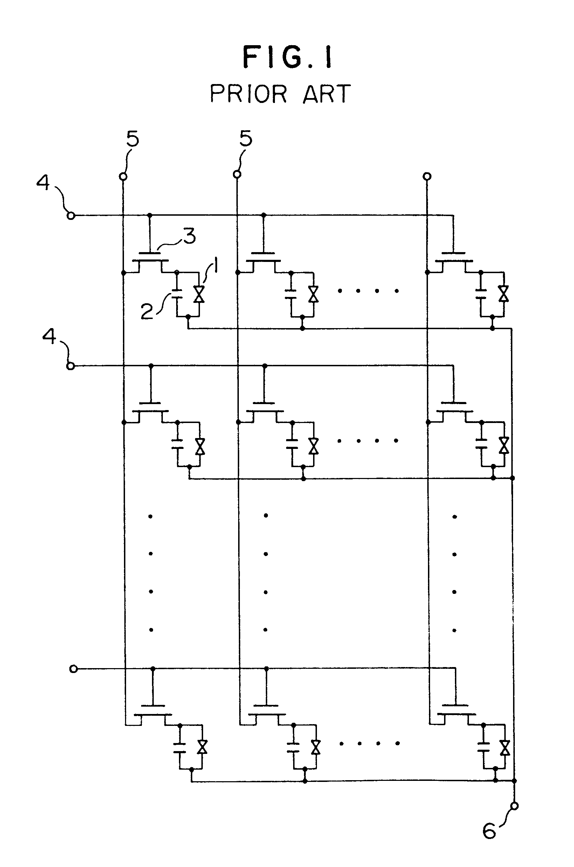

In Fig. 1 showing a matrix type liquid crystal display, a liquid crystal cell 1, storage capacitor 2 and field effect transistor (FET) 3 that serves as a switching element constitute a liquid crystal display element for displaying each picture element (pixel). An X-electrode 4 is supplied with a switching signal and a Y-electrode 5 is supplied with an image signal. A common electrode 6 provided on an opposite substrate is supplied with a common voltage.

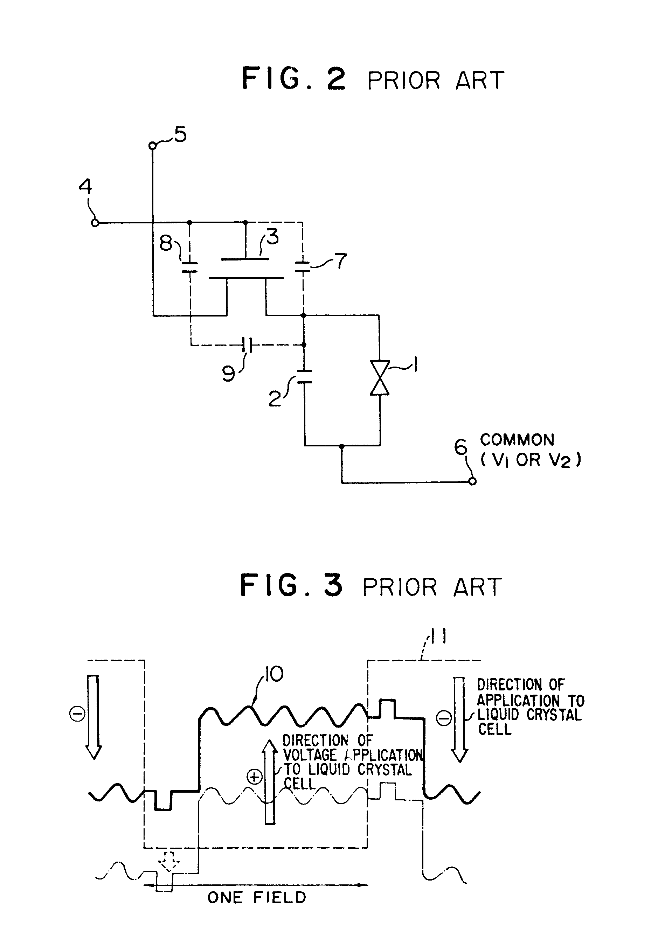

In Fig. 2 showing one display element in detail, 1 to 6 denote like parts in Fig. 1 and 7, 8 and 9 denote capacitances $C_{GS}$, $C_{GD}$ and $C_{DS}$ among the electrodes of the FET, respectively. Y-electrode 5 is supplied with an image signal that is inverted in its polarity every one field as shown by 10 in Fig. 3 and sampled by each switching element for each pixel. Common electrode 6 is supplied with a common voltage that is inverted in its polarity every one field as shown by 11 in Fig. 3. The image signal voltage is applied to one electrode of the liquid crystal cell 1 when FET 3 is turned on by the switching signal applied to X-electrode 4. This switching signal turns on FET 3 during 1 H (H denotes a horizontal scanning period: 63.5 $\mu$ sec.) and turns off it during the remaining about one-field period (16.7 m sec.). Storage capacitor 2 holds during the "off" period a charge corresponding to the image signal voltage applied during the "on" period. The drive voltage applied across the liquid crystal cell 1 is inverted in its polarity during the subsequent one field, for A.C. drive of the liquid crystal panel.

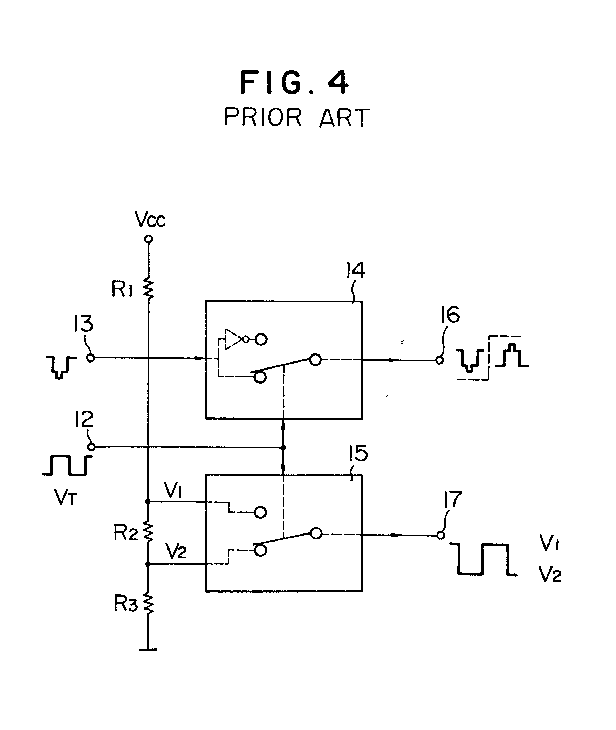

Fig. 4 shows a circuit for inverting the image signal and the common voltage. In Fig. 4, 12 denotes an input terminal of a switching signal $V_T$ that is changed into a high/low level every one field. This $V_T$ signal is employed to switch, every one field, inverter circuits 14 and 15 to alternately derive, the image signal applied to an image input terminal 13 and its polarity-inverted image signal, and to alternately derive a common voltage $V_1$ obtained by dividing a power voltage $V_{cc}$ by resistances $R_1$, $R_2$ and $R_3$ and its polarity-inverted voltage $V_2$. Namely, the image signal is inverted in its polarity every one field and sent to an image output terminal 16. This polarity-inverted image signal is applied to Y-electrode 5 of Fig. 2 through a Y-driver. The $V_1$ and $V_2$ voltages, polarity-inverted every one field, are sent to a common voltage terminal 17 and applied to common electrode 6 of Fig. 2.

The above mentioned point art arrangement suffers from the following disadvantages.

Since, as shown in Fig. 2, inter-electrode capacitances $C_{GS}$ 7, $C_{GD}$ 8 and $C_{SD}$ 9 exist among the electrodes of FET 3, and also the capacitance of storage capacitor 2 may vary because of the fabrication process of the liquid crystal panel, the image signal voltage and the common voltage applied to an electrode of a liquid crystal cell may not be correctly related. More specifically, although the polarity-inverted voltage must be applied across a liquid crystal cell with a predetermined voltage difference every one field, the level of image signal voltage 10 may vary at one electrode of the liquid crystal cell because of the above variation as shown, for example, by one-dotted chain line in Fig. 3. Thus, the applied voltage may be partially inverted as shown by the dotted arrow in Fig. 3 or the difference between the image signal voltage and the common voltage (i.e. the amplitude of the voltage applied across the liquid crystal cell) may fluctuate among the respective fields.

From DE-A-32 12 863 is known a driver circuit for A.C. driving the liquid crystal cells of a liquid crystal display which are arranged in a matrix shape. Each of the liquid crystal cells has one electrode connected to a switching element driven by an input image signal voltage and a switching signal, and an opposite electrode, the opposite electrodes of the liquid crystal cells of groups of three lines being connected together for supplying with a common voltage. For A.C. driving the liquid crystal display, the input image signal voltage and the common voltage each is polarity-inverted with the field period by respective inversion means. Also in this known display, the level of the input image signal voltage may be subjected to variations due to different inter-electrode capacitances or due to variations in the fabrication process, as discussed above with reference to Figures 2 and 3, such that the difference between the image signal voltage and the common voltage may fluctuate among the respective fields.

Also from US-A-4 395 708 is known a liquid crystal display including a driver circuit in which, for A.C. driving the liquid crystal display, the image signal voltage is polarity-inverted with the field period by level-shifting alternating ranges of the signal, so that the signal has voltage levels symmetrically disposed above and below a predetermined reference level. However, also in this known display the voltage difference between the image signal voltage and the common voltage at the electrodes of the liquid crystal cells may vary due to the above mentioned inter-electrode capacitances or variations in the fabrication process and result in fluctuations among the respective fields.

## OBJECT OF THE INVENTION

Therefore, it is the object of the present invention to provide a driver circuit for a liquid crystal display which easily can adjust the image signal voltage and the common voltage in a predetermined relation.

## SUMMARY OF THE INVENTION

In accordance with the present invention, there is provided a driver circuit for A.C. driving a liquid crystal display cell comprising signal voltage inversion means for polarity-inverting, periodically with a given period, a display signal voltage to be applied to one electrode of the liquid crystal display cell and common voltage inversion means for polarity-inverting a common voltage to be applied to an opposite common electrode thereof, so that the common voltage is level-shifted, periodically with the given period, in different directions in each alternate said period, comprising D.C. level shifting means for varying D.C. voltage level of at least one of the polarity-inverted signal voltage and common voltage periodically with the given period by a same amount in a same direction in each period.

In this way, where the relation between the signal voltage and the common voltage deviates from a predetermined relation as in the prior art arrangement, they can be correctly adjusted so as to be in the predetermined relation by varying at least one of them in their D.C. level. Thus, the liquid crystal panel can be correctly A.C.-driven so that its performance will be greatly improved and its life will be lengthened.

The above and other objects, features and advantages of this invention will be more clearly understood from the following description taken in conjunction with the accompanying drawings.

## BRIEF DESCRIPTION OF THE DRAWINGS

Fig. 1 shows a schematic arrangement of a matrix type liquid crystal display.

Fig. 2 shows a schematic arrangement of one liquid crystal display element for displaying each picture element in the matrix type liquid crystal display.

Fig. 3 is a waveform chart of voltages applied to one electrode of a liquid crystal cell.

Fig. 4 is a circuit diagram of a driver circuit for the prior art liquid crystal display.

Fig. 5 is a circuit diagram of a driver circuit for a liquid crystal display according to one embodiment of this invention.

Fig. 6 is a circuit diagram of a driver circuit for a liquid crystal display according to another embodiment of this invention.

## DESCRIPTION OF THE PREFERRED EMBODIMENTS

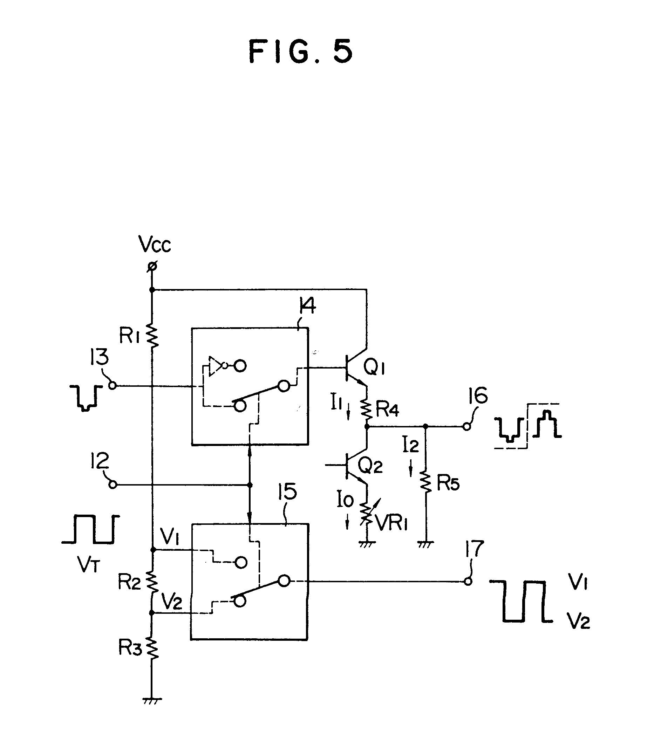

In Fig. 5 showing one embodiment of a driver circuit for a liquid crystal display, 12 denotes an input terminal of a switching signal $V_T$ that is changed into a high/low level every one field. This $V_T$ signal is employed to alternately derive the image signal applied to an image input terminal 13 and its polarity-inverted image signal, and alternately derive a common voltage $V_1$ obtained by resistances $R_1$, $R_2$ and $R_3$ and its polarity-inverted voltage $V_2$, by switching inverter circuits 14 and 15 every one field respectively. The image signal polarity-inverted by inverter circuit 14 is driven by means of an emitter follower of a

transistor $Q_1$ and is connected through a resistor $R_4$ with a constant current source composed of a transistor $Q_2$ and a variable resistor $VR_1$. By varying the current of the constant current source by the variable resistor $VR_1$, the image signal can be varied in its D.C. level by the same amount in the same direction in each field. Namely, assuming that $I_1$ is the D.C. component of the emitter current of transistor $Q_1$, $I_0$ is the emitter current (D.C. current) of transistor $Q_2$, $I_2$ is the D.C. component of the current flowing through a resistor R5, $V_0$ is the D.C. level voltage at an image output terminal 16 and $V_{E1}$ is the D.C. component of the emitter voltage of transistor $Q_1$,

$$V_0 = (V_{E1} - R_4 I_0) \times \frac{R_5}{R_4 + R_5} \qquad \ldots\ldots\ldots (1)$$

Therefore, by varying the current $I_0$ from the constant current source, the polarity-inverted image signal can be varied in its D.C. level by the same amount in the same direction in each field.

In this way, in accordance with this embodiment, in the case where the polarity inverted image signal to be applied to one electrode of a liquid crystal cell is deviated low in its D.C. level as shown, for example, by a one-dotted chain line in Fig. 3, the output image signal can be elevated in its D.C. level to a predetermined level as shown by the image signal 10 of a solid line in Fig. 3 by controlling the D.C. current flowing through transistor $Q_2$ of the constant current source so as to be decreased, thereby permitting the liquid crystal cell to be A.C. driven in a predetermined voltage relation.

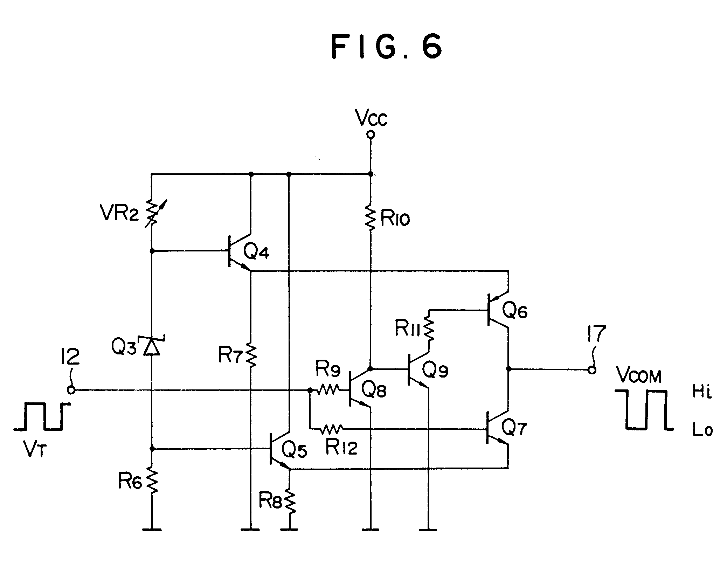

Another embodiment of this invention will be explained with reference to Fig. 6. In Fig. 6, 12 denotes an input terminal of a $V_T$ signal that is changed into a high/low level every one field and 17 denotes a common voltage output terminal. The voltages at the ends of a constant voltage device $Q_3$ are applied to the emitters of transistors $Q_6$, $Q_7$ through the emitter followers of transistors $Q_4$, $Q_5$, respectively. When the $V_T$ signal is in the high level, transistor $Q_7$ is turned on so that the voltage at common voltage output terminal 17 is in a low level $V_{COM(Lo)}$. On the other hand, when the $V_T$ signal is in the low level, a transistor $Q_8$ is turned off and transistors $Q_9$, $Q_6$ are turned on so that the voltage at common voltage output terminal 17 is a high level $V_{COM(Hi)}$. Assuming that the voltage difference across constant voltage device $Q_3$ is $V_{Q3}$, the base-emitter voltage of each transistor is $V_{BE}$ and the saturation voltage of each transistor is $V_{CE}(sat)$,

$$V_{COM(Lo)} = (V_{CC} - V_{Q3}) \times \frac{R_6}{VR_2 + R_6} - V_{BEQ_5}$$

$$+ V_{CE(sat)Q_7} \qquad \ldots\ldots\ldots\ldots (2)$$

$$V_{COM(Hi)} = (V_{CC} - V_{Q3}) \times \frac{R_6}{VR_2 + R_6} + V_{Q3}$$

$$- V_{BEQ_4} - V_{CE(sat)Q_6} \qquad \ldots\ldots\ldots\ldots (3)$$

Therefore, by varying the value of $V_{R2}$, the common voltage can be adjusted in its D.C. level with the difference between its both levels maintained constant.

In this way, in accordance with this embodiment, the common voltage can be varied with the difference between its both levels maintained constant so that the relation between the image signal and the common voltage can be always correctly adjusted. For example, in the case where the image signal level is deviated low with respect to the common voltage as shown by a one-dotted chain line in Fig. 3, the D.C. level of the common voltage can be reduced to a predetermined level by controlling the variable resistor $VR_2$ so as to be increased, thereby permitting the liquid crystal cell to be A.C. driven in a predetermined voltage relation.

## Claims

1. A driver circuit for A.C. driving a liquid crystal display cell comprising signal voltage inversion means (14) for polarity-inverting, periodically with a given period, a display signal voltage to be applied to one electrode of the liquid crystal display cell and common voltage inversion means (15) for polarity-inverting a common voltage to be applied to an opposite common electrode thereof, so that the common voltage is level-shifted, periodically with the given period, in different directions in each alternate said period,

   **characterized by**

   D.C. level shifting means ($Q_1$, $Q_2$, $R_4$, $R_5$, $VR_1$) for varying D.C. voltage level of at least one of the polarity-inverted signal voltage and common voltage periodically with the given period by a same amount in a same direction in each period.

2. A driver circuit according to Claim 1, comprising a switching element (3) having a first electrode to be supplied with a switching signal, a second electrode to be supplied with a display signal voltage and a third electrode connected with one electrode of the liquid crystal cell.

3. A driver circuit according to Claim 1 or 2, wherein said D.C. level shifting means comprises a first transistor ($Q_1$) for receiving the polarity inverted signal voltage, a series circuit comprising first and second resistors ($R_4$, $R_5$) connected with the emitter of said first transistor, a signal voltage output terminal (16) provided at a connection point of said first and second resistors and a constant current source ($Q_2$, $VR_1$) with its current value being adjustable, connected in parallel to said second resistor.

4. A driver circuit according to Claim 3, wherein said constant current source includes a series circuit comprising a second transistor ($Q_2$) and a variable resistor ($VR_1$).

5. A driver circuit according to Claim 1 or 2, wherein said common voltage polarity inversion means comprises a constant voltage device ($Q_3$) and switching means ($Q_6$ - $Q_9$) for alternately outputting two voltages provided from both ends of said constant voltage device.

6. A driver circuit according to Claim 5, wherein said D.C. level shifting means comprises means ($VR_2$) for varying the voltage applied to said constant voltage device.

## Patentansprüche

1. Treiberschaltung zum wechselstrommäßigen Treiben einer Flüssigkristallanzeigezelle, enthaltend eine Signalspannungsinversionseinrichtung (14) zur Polaritätsinvertierung einer an eine Elektrode der Flüssigkristallanzeigezelle anzulegenden Anzeigesignalspannung periodisch mit einer gegebenen Periode und eine gemeinsame Spannungsinversionseinrichtung (15) zur Polaritätsinvertierung einer an eine entgegengesetzte gemeinsame Elektrode derselben anzulegenden gemeinsamen Spannung, so daß die gemeinsame Spannung pegelverschoben wird, periodisch mit der gegebenen Periode in verschiedenen Richtungen in jeder abwechselnden besagten Periode,

   **gekennzeichnet durch**

   eine Gleichstrompegelverschiebungseinrichtung ($Q_1$,$Q_2$,$R_4$,$R_5$,$VR_1$) zum Verändern des Gleichspannungspegels mindestens einer von der polaritätsinvertierten Signalspannung und gemeinsamen Spannung periodisch mit der gegebenen Periode um einen gleichen Betrag in einer gleichen Richtung in jeder Periode.

2. Treiberschaltung nach Anspruch 1, enthaltend ein Schaltelement (3) mit einer mit einem Schaltsignal zu beaufschlagenden ersten Elektrode, einer mit einer Anzeigesignalspannung zu beaufschlagenden zweiten Elektrode und einer mit einer Elektrode der Flüssigkristallzelle verbundenen dritten Elektrode.

3. Treiberschaltung nach Anspruch 1 oder 2, bei der die Gleichstrompegelverschiebungseinrichtung einen ersten Transistor ($Q_1$) zur Aufnahme der polaritätsinvertierten Signalspannung, eine mit dem Emitter des ersten Transistors verbundene Serienschaltung umfassend erste und zweite Widerstände ($R_4$,$R_5$), einen an einem Verbindungspunkt der ersten und zweiten Widerstände vorgesehenen Signalspannungsausgangsanschluß (16) und eine mit dem zweiten Widerstand parallel geschaltete Konstantstromquelle ($Q_2$,$VR_1$) mit einstellbarem Stromwert enthält.

4. Treiberschaltung nach Anspruch 3, bei der die Konstantstromquelle eine Serienschaltung enthält, die einen zweiten Transistor ($Q_2$) und einen variablen Widerstand ($VR_1$) umfaßt.

5. Treiberschaltung nach Anspruch 1 oder 2, bei der die gemeinsame Spannungspolaritätsinversionseinrichtung eine Konstantspannungseinrichtung ($Q_3$) und eine Schalteinrichtung ($Q_6$-$Q_9$) zum abwechselnden Ausgeben zweier von den beiden Enden der Konstantspannungseinrichtung abgegebener Spannungen enthält.

6. Treiberschaltung nach Anspruch 5, bei der die Gleichstrompegelverschiebungseinrichtung eine Einrichtung ($VR_2$) zum Verändern der der Konstantspannungseinrichtung zugeführten Spannung enthält.


**Revendications**

1. Circuit pilote pour la commande par courant alternatif d'une cellule d'affichage à cristal liquide, comprenant des moyens (14) d'inversion de tension de signal pour inverser en polarité, périodiquement avec une période donnée, une tension de signal d'affichage devant être appliquée à une électrode de la cellule d'affichage à cristal liquide, et des moyens (15) d'inversion de tension commune pour inverser en polarité une tension commune devant être appliquée à une électrode commune opposée de ladite cellule, de sorte que la tension commune soit décalée de niveau, périodiquement avec la période donnée, dans des sens différents dans une sur deux desdites périodes,
caractérisé par des moyens ($Q_1$, $Q_2$, $R_4$, $R_5$, $VR_1$) de décalage de niveau de courant continu, pour faire varier le niveau de tension continue de l'une au moins de la tension de signal et de la tension commune inversées en polarité, périodiquement avec la période donnée, dans la même mesure et dans le même sens dans chaque période.

2. Circuit pilote selon la revendication 1, comprenant un élément de commutation (3) comportant une première électrode à laquelle peut être appliqué un signal de commutation, une deuxième électrode à laquelle peut être appliquée une tension de signal d'affichage, et une troisième électrode raccordée à l'une des électrodes de la cellule à cristal liquide.

3. Circuit pilote selon la revendication 1 ou 2, dans lequel lesdits moyens de décalage de niveau de courant continu comprennent un premier transistor ($Q_1$) pour recevoir la tension de signal inversée en polarité, un circuit série comprenant des première et seconde résistances ($R_4$, $R_5$) et raccordé à l'émetteur dudit premier transistor, une borne de sortie de tension de signal (16) située au point de jonction desdites première et seconde résistances, et une source de courant constant ($Q_2$, $VR_1$) dont la valeur de courant est réglable, montée en parallèle sur ladite seconde résistance.

4. Circuit pilote selon la revendication 3, dans lequel ladite source de courant constant comporte un circuit série comprenant un second transistor ($Q_2$) et une résistance variable ($VR_1$).

5. Circuit pilote selon la revendication 1 ou 2, dans lequel lesdits moyens d'inversion de polarité de tension commune comprennent un dispositif à tension constante ($Q_3$) et des moyens de commutation ($Q_6$-$Q_9$) pour délivrer alternativement en sortie deux tensions provenant des deux extrémités dudit dispositif à tension constante.

6. Circuit pilote selon la revendication 5, dans lequel lesdits moyens de décalage de niveau de courant continu comprennent des moyens ($VR_2$) pour faire varier la tension appliquée audit dispositif à tension constante.

# FIG. I
## PRIOR ART

## FIG. 2 PRIOR ART

## FIG. 3 PRIOR ART

# FIG. 4
## PRIOR ART

# FIG. 5

F I G. 6

EP 0 199 361 B1